Europäisches Patentamt

European Patent Office

Office européen des brevets

(11) Veröffentlichungsnummer: **0 330 994**
**A1**

## (12) EUROPÄISCHE PATENTANMELDUNG

(21) Anmeldenummer: **89103135.3**

(22) Anmeldetag: **23.02.89**

(51) Int. Cl.⁴: **B65G 57/22**

(30) Priorität: **03.03.88 DE 3806803**

(43) Veröffentlichungstag der Anmeldung:
**06.09.89 Patentblatt 89/36**

(84) Benannte Vertragsstaaten:
**AT BE DE ES FR GB IT NL**

(71) Anmelder: **FTH Fördertechnik Hamburg GmbH**
**Tornescher Weg 5-7**
**D-2082 Uetersen(DE)**

(72) Erfinder: **Kurt, Hansen**
**Heisterkampstrasse 22**
**D-2082 Uetersen(DE)**

(74) Vertreter: **Hansmann, Dierk, Dipl.-Ing.**
**Jessenstrasse 4**
**D-2000 Hamburg 50(DE)**

(54) **Vorrichtung zum Beladen von Paletten mit Stückgüter.**

(57) Bei einer Anordnung dieser Art ist vorgesehen, daß die zugeführten Einheiten (1-10) auf einer Transportbahn (11) entsprechend der parallel zugeordneten Absetzpositionen der Einheiten (1-10) auf der Palette (13) über einen einstellbaren Anschlag (17) oder einer einstellbaren Palette (13) positioniert und über eine Lastaufnahme (16) aufgenommen werden. Die Lastaufnahme (16) ist über einen Arm (15), der über eine Konsole (14) geführt ist höhenverstellbar und quer zur Transportbahn (11) verfahrbar. Um die vorgegebenen Positionen auf einer Palette (13) zu erreichen, ist zusätzlich eine Palettendrehstation (12) angeordnet, die die Palette (13) jeweils in einzelnen Schritten um 90° verdreht.

FIG.2

## Vorrichtung zum Beladen von Paletten mit Stückgüter

Die Erfindung bezieht sich auf eine Vorrichtung zum Beladen von Paletten mit Stückgüter, insbesondere instabile Stückgüter, mit einer etwa gleichbleibenden Form, wobei mehrere Einheiten eine Lage bilden und durch einen Wechsel der Lagenbildung eine Verbundstapelung für einen stabilen Stückgutstapel herstellbar ist, mit einer Transportbahn von der die Einheiten seitlich über Handhabungsgeräte auf eine Drehstation nach Positionierung von Einheiten zuführbar sind.

Eine Anordnung dieser Art ist nach der DD-PS 239 999 bekannt geworden. Hierbei ist durch die Vielzahl der einzelnen Stationen ein großer Raumbedarf für die Aufstellung einer Anlage erforderlich. Zusätzlich ist ein Verschieben der gebildeten einzelnen Einheiten und der gesamten Lage erforderlich, um eine Verbundstapelung herbeizuführen. Somit ist die Stapelbildung relativ zeitaufwendig. Ferner ist zu berücksichtigen, daß diese Anordnung voraussetzt, daß die einzelnen zu verarbeitenden Güter überhaupt einen Schiebevorgang zulassen. Dieses ist bei instabilen Einheiten beispielsweise nicht der Fall.

Der Erfindung liegt die Aufgabe zugrunde, eine gattungsgemäße Vorrichtung zu verbessern und eine platzsparende Anordnung zu schaffen sowie die Gesamtheit der Bewegungsabläufe zur Verbundstapelung zu reduzieren. Gleichzeitig soll eine Handhabung von instabilen Einheiten ermöglicht werden.

Die Lösung dieser Aufgabe erfolgt erfindungsgemäß dadurch, daß das Handhabungsgerät als Lastaufnahme für die mittels eines einstellbar steuerbaren Anschlages positionierten Einheiten ausgebildet ist, und über eine höhenverstellbare (Z-Achse) und quer (X-Achse) zur Transportbahn verfahrbare Halterung an einer Führungskonsole zwischen der Transportbahn und der Drehstation zum Absetzen auf der Palette angeordnet ist.

Hierdurch ist es möglich, eine kompakte Vorrichtung auszubilden und das Handhabungsgerät als bewegliches Aggregat lediglich höhenverstellbar und querbeweglich auszubilden, um alle erforderlichen Ablage- und Aufnahmepositionen zu erreichen. Dadurch führt die Lastaufnahme nur gerade Transportbewegungen ohne Drehbewegungen durch, so daß sich auch eine kurze Palettierzeit ergibt.

Ein Handhabungsgerät zur Bildung von Verarbeitungsstapeln ist zwar bereits gemäß der FR-PS 1 511 367 bekannt. Hierbei wird keine transportfähige Verbundstapelung angestrebt.

Eine Parallellösung besteht darin, daß daß das Handhabungsgerät als Lastaufnahme für die mittels eines Anschlages positionierten Einheiten ausgebildet ist, und über eine höhenverstellbare (Z-Achse) und quer (X-Achse) zur Transportbahn verfahrbare Halterung an einer Führungskonsole zwischen der Transportbahn und der Drehstation zum Absetzen auf der Palette angeordnet und daß die Palette zur Lagenbildung etwa parallel zur Transportbahn einstellbar ist.

Eine einfache Ausbildung wird dadurch geschaffen, daß die Lastaufnahme durch eine Aufnahmegabel gebildet ist.

Um den Bewegungsablauf zur Stapelbildung zu beschleunigen, wird vorgeschlagen, daß daß die Drehstation zusätzlich zur Lastaufnahme höhenverstellbar ist.

Eine günstige Zuordnung wird dadurch erreicht, daß die Mitte der Lastaufnahme gegenüber der Mitte der Palettendrehstation etwa um die Hälfte der Breite einer Einheit versetzt angeordnet ist. Eine Alternative besteht darin, daß die Mitte der Palettendrehstation gegenüber der Mitte der Lastaufnahme verstellbar ist.

Um eine Automatisierung zu ermöglichen, ist vorgesehen, daß die Antriebsmittel für die Palettendrehstation, für den einstellbaren Haltepunkt, wie einen Anschlag, der Transportbahn, für die Quer- und Höhenverstellung der Halterung der Lastaufnahme von einer zentralen Steuereinheit entsprechend der vorgegebenen Lagepläne der Einheiten für die einzelnen Lagen auf der Palette ansteuerbar sind.

In der Zeichnung sind Ausführungsbeispiele der Erfindung schematisch dargestellt. Es zeigen:

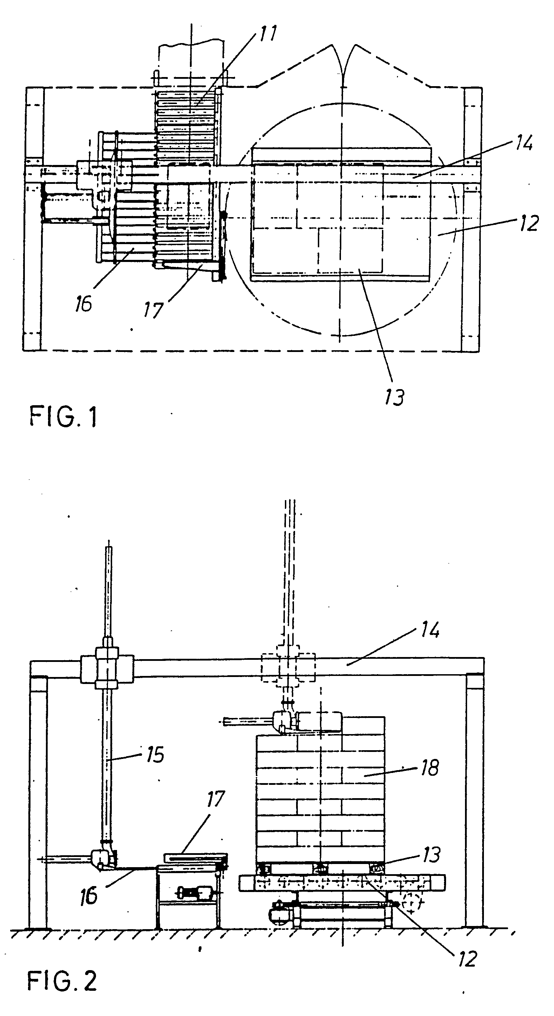

Fig. 1 eine Draufsicht auf eine Vorrichtung,

Fig. 2 eine Vorderansicht gemäß Fig. 1,

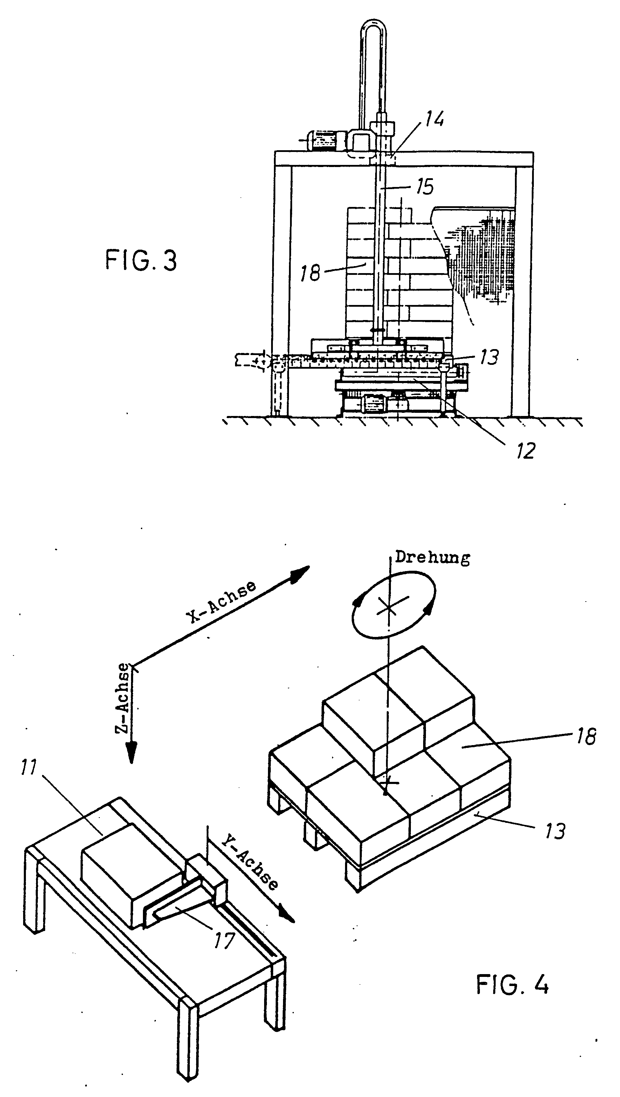

Fig. 3 eine Seitenansicht gemäß Fig. 1,

Fig. 4 ein Prinzipschema,

Fig.5a bis 5d einzelne Beladeschritte zur Bildung von zwei Lagen bei zugeordneter Mitte von Aufnahmegabel und Palettendrehstation,

Fig.6a,b eine alternative Ausbildung einer zweiten Lage gemäß Fig. 5c,d,

Fig.7a bis 7d einzelne Beladeschritte zur Bildung von zwei Lagen und abweichenden Mitten von Aufnahmegabel und Palettendrehstation,

Fig.8a,b einzelne Beladeschritte zur Bildung von zwei Lagen und wechselndem Mittenabstand von Aufnahmegabel und Palettendrehstation,

Fig. 9 bis 11 eine weiteres Ausführungsbeispiel einer Vorrichtung in Draufsicht, Vorderansicht und Seitenansicht,

Fig. 12 eine Lastaufnahme gemäß Fig. 11 in Form einer Saugplatte in vergrößerter Darstellung.

Fig. 13a bis 13d eine weitere Ausführungsform mit einem festen Anschlag und einer verschiebbaren Palette in einzelnen Beladeschritten zur Bildung von zwei Lagen.

Die dargestellte Anordnung besteht aus einer Transportbahn 11, die als Zuführförderer für einzelne Einheiten 1 bis 10 dient. Parallel zur Transportbahn 11 ist eine Palettendrehstation 12 zur Aufnahme einer Palette 13 angeordnet, die mit ihren Seiten in jeder Beladestellung jeweils parallel bzw. rechtwinklig zur Transportbahn 11 liegt.

Oberhalb der Transportbahn 11 und der Palettendrehstation 12 ist eine ortsfeste Führungskonsole 14 angeordnet, die rechtwinklig zur Transportbahn 11 verläuft. Die Führungskonsole 14 nimmt einen Haltearm 15 auf, der verfahrbar und gleichzeitig höhenverstellbar derart angeordnet ist, daß eine am unteren Ende angeordnete Aufnahmegabel 16 im Bereich der Transportbahn 11 zur Aufnahme von Einheiten 1 bis 10 absenkbar und anhebbar, seitwärts verfahrbar sowie anschließend im Bereich der Palette 13 in der zugeordneten Position zur Abgabe der Einheiten 1 bis 10 wieder absenkbar ist.

Die auf die Palette 13 aufzubringenden Einheiten 1 bis 10 werden über die Transportbahn 11 in bekannter Weise zugeführt und über einen steuerbaren Anschlag 17 parallel zur zugeordneten Absetzposition auf der Palette 13 positioniert. Aus dieser Position erfolgt die Aufnahme über die Aufnahmegabel 16 und die Zuführung in den Bereich der Palette 13 auf der Palettendrehstation 14 durch Anheben, Verfahren und Absenken zur Abgabe der Einheiten 1 bis 10.

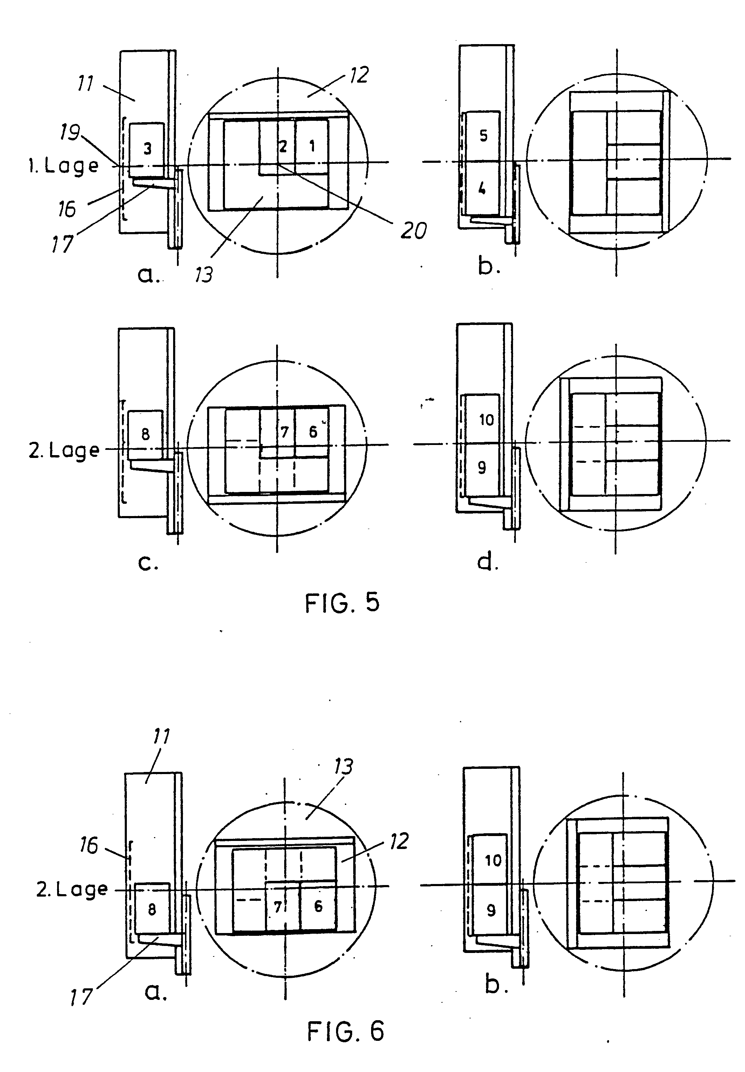

Gemäß Fig. 5 ist ein Absetzvorgang der einzelnen Einheiten 1 bis 10 in der ersten und zweiten Lage zur Bildung eines Stückgutstapels 18 dargestellt. Hierbei wird nach dem Absetzen der Einheiten 1 bis 3 auf der Palette 13 die Palettendrehstation 12 um 90° gedreht und nunmehr die Einheiten 4 und 5 gemeinsam auf der Palette 13 abgesetzt werden. Zur Bildung der zweiten Lage und Erzielung einer Verbundstapelung wird die Palettendrehstation 12 wieder um 90° verdreht, so daß die Einheiten 6 bis 8 aufgebracht werden können. Nach erneuter Verdrehung um 90° werden die Einheiten 9 und 10 gemeinsam auf der Palette 13 abgesetzt. Gemäß Fig. 6 ist die Bildung einer zweiten Lage in alternativer Weise gezeigt.

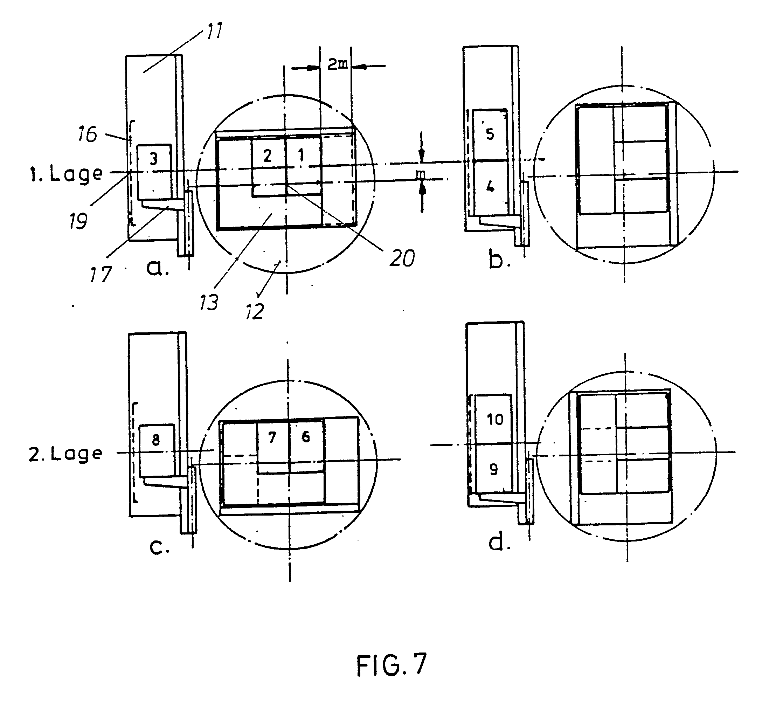

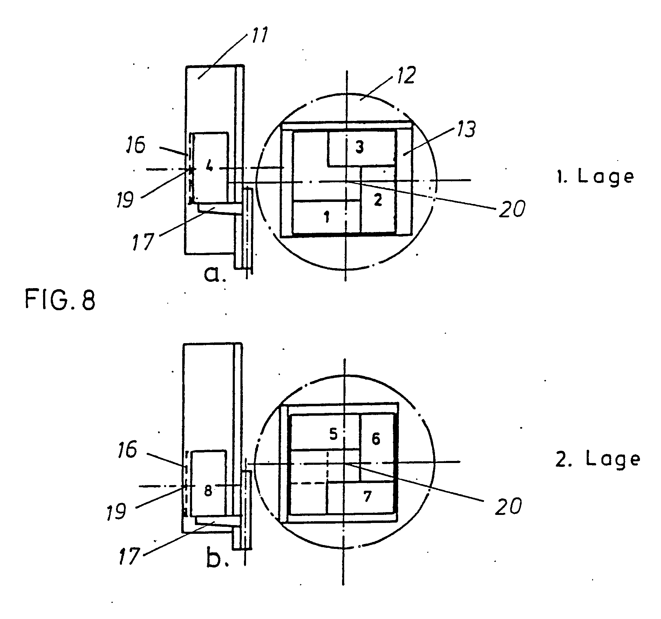

Gemäß Fig. 7 ist eine Beschickung der Palette 13 dargestellt, bei der die Mitte 19 der Aufnahmegabel 16 gegenüber dem Drehpunkt 20 der Palettendrehstation 12 etwa um die Hälfte der Breite einer Einheit 1 bis 10 versetzt angeordnet ist. Selbstverständlich ist es auch möglich, siehe Fig. 8, den Drehpunkt 20 der Drehstation 12 bei der Bildung der einzelnen Lagen gegenüber der Mitte 19 der Aufnahmegabel 16 zu verstellen.

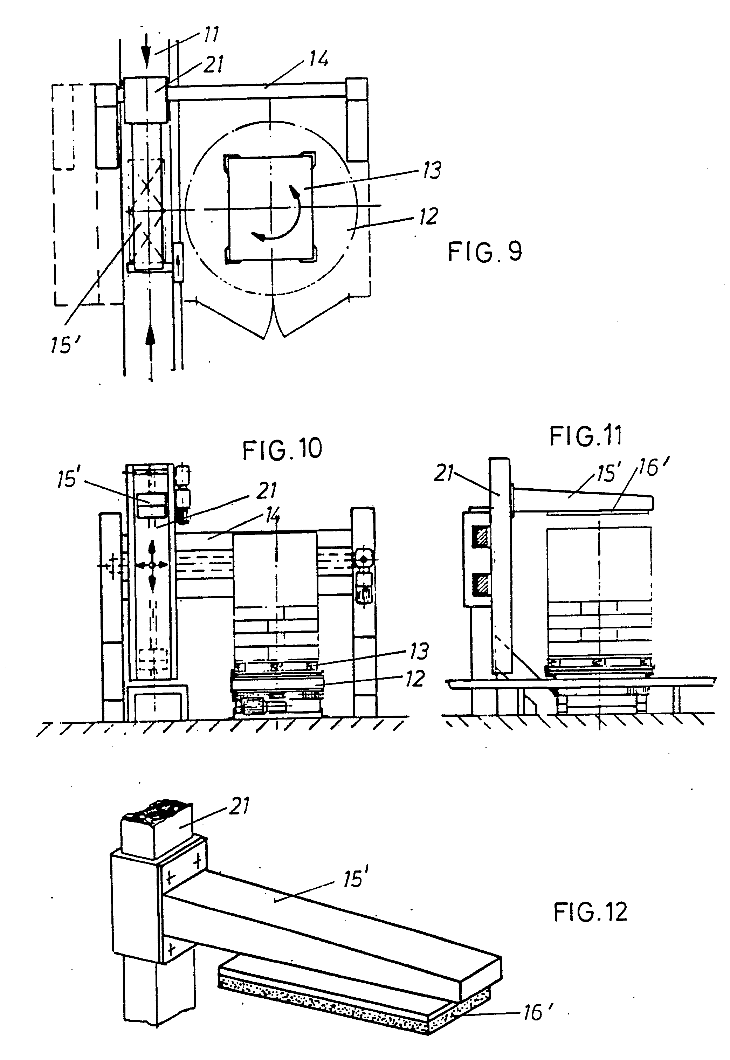

Bei dem weiteren Ausführungsbeispiel gemäß Fig. 9 bis 12 ist die Führungskonsole 14 als Führungsbahn versetzt gegenüber der Palette 13 angeordnet und die verfahrbare Halterung 15 zur Höhenverstellung und Querverfahrbarkeit wird durch einen Kragarm 15' gebildet, die als Lastaufnahme eine Saugplatte 16' aufweist. Der Kragarm 15' ist dabei über eine Halterung 21 geführt. Der Bewegungsablauf ist quasi identisch gegenüber dem ersten Ausführungsbeispiel. Es wird zum Aufnehmen und Ablegen einer Einheit, eine erforderliche Bewegung in der X-Achse, wie sie bei einer Lastaufnahmegabel 16 nötig ist, zusätzlich eingespart.

Durch diese Anordnungen werden die für das gezielte räumliche Ablegen aus einer Grundposition erforderlichen Bewegungsabläufe auf drei Elemente verteilt, nämlich:
- Transportbahn
- verstellbarer Arm mit Lastaufnahme
- Palettendrehstation.

Somit ist es nur erforderlich, nach Positionierung der Einheiten 1 bis 10 auf der Transportbahn 11 die Aufnahmegabel 16 über den Arm 15 in der Z-Achse und in der X-Achse zu verfahren. Die Breite der Aufnahmegabel 16 entspricht der Palettenbreite, um alle Möglichkeiten auszuschöpfen.

Die Antriebsaggregate der einzelnen Elemente werden über eine nicht näher dargestellte gemeinsame Steuereinheit in den Bewegungsabläufen koordiniert und über eine Vorprogrammierung eine Verbundstapelung herbeigeführt.

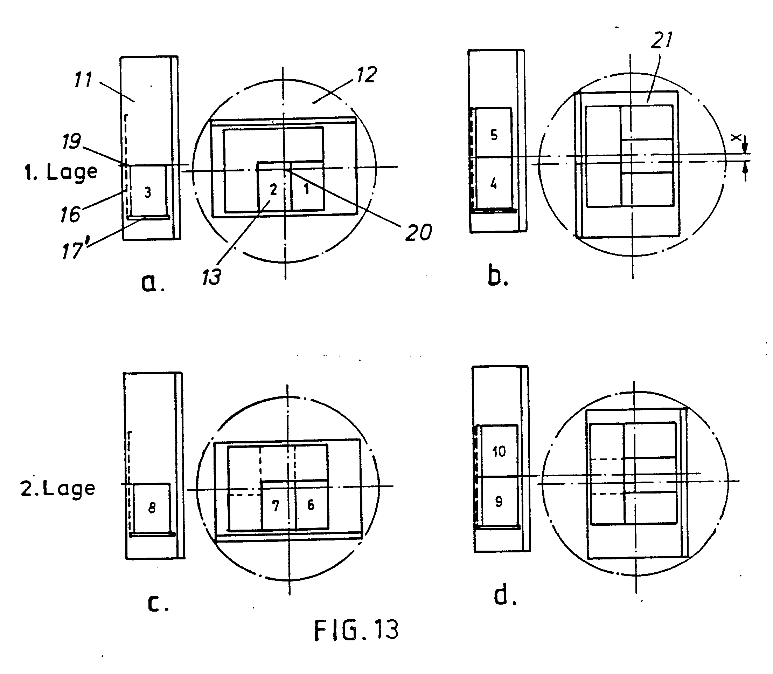

In dem weiteren Ausführungsbeispiel gemäß Fig. 13 ist ein feststehender Anschlag 17' auf der als Zuführung dienenden Transportbahn 11 angeordnet und die Palette 13 parallel zur Transportbahn 11 über ein Laufband 21 als Aufnahme am Drehtisch 12 einstellbar. Hierdurch ist es möglich, eine Mittelpunktverschiebung durchzuführen, um eine Anpassung an die Verhältnisse der Länge und Breite der zu stapelnden Einheiten 1-10 für eine Verbundstapelung durchzuführen.

**Ansprüche**

1. Vorrichtung zum Beladen von Paletten (13) mit Stückgüter, insbesondere instabile Stückgüter, mit einer etwa gleichbleibenden Form, wobei mehrere Einheiten (1-10) eine Lage bilden und durch einen Wechsel der Lagenbildung eine Verbundstapelung für einen stabilen Stückgutstapel (18) herstellbar ist, mit einer Transportbahn (11), von der die Einheiten (1-10) seitlich über Handhabungsgeräte (16) auf eine Drehstation (12) nach Positionierung von Einheiten (1-10) zuführbar sind, dadurch gekennzeichnet, daß das Handhabungsgerät als Lastaufnahme (16) für die mittels eines einstellbar steuerbaren Anschlages (17) einstellbaren Einheiten (1-10) ausgebildet ist, und über eine höhenverstellbare (Z-Achse) und quer (X-Achse) zur Transportbahn (11) verfahrbare Halterung (15) an einer Führungskonsole (14) zwischen der Transportbahn (11) und der Drehstation (12) zum Absetzen auf der Palette (13) angeordnet ist.

2 Vorrichtung zum Beladen von Paletten (13) mit Stückgüter, insbesondere instabile Stückgüter, mit einer etwa gleichbleibenden Form, wobei mehrere Einheiten (1-10) eine Lage bilden und durch einen Wechsel der Lagenbildung eine Verbundstapelung für einen stabilen Stückgutstapel (18) herstellbar ist, mit einer Transportbahn (11), von der die Einheiten (1-10) seitlich über Handhabungsgeräte (16) auf eine Drehstation (12) nach Positionierung von Einheiten (1-10) zuführbar sind, dadurch gekennzeichnet, daß das Handhabungsgerät als Lastaufnahme (16) für die mittels eines Anschlages (17) positionierten Einheiten (1-10) ausgebildet ist, und über eine höhenverstellbare (Z-Achse) und quer (X-Achse) zur Transportbahn (11) verfahrbare Halterung (15) an einer Führungskonsole (14) zwischen der Transportbahn (11) und der Drehstation (12) zum Absetzen auf der Palette (13) angeordnet und daß die Palette (13) zur Lagenbildung etwa parallel zur Transportbahn (11) einstellbar ist.

3. Vorrichtung nach Anspruch 1 oder 2, dadurch gekennzeichnet, daß die Lastaufnahme (16) durch eine Aufnahmegabel gebildet ist.

4. Vorrichtung nach einem der Ansprüche 1 bis 3, dadurch gekennzeichnet, daß die Drehstation (12) zusätzlich zur Lastaufnahme (16) höhenverstellbar ist.

5. Vorrichtung nach Anspruch 1 oder 4, dadurch gekennzeichnet, daß die Mitte (19) der Lastaufnahme (16) gegenüber der Mitte (20) der Palettendrehstation (12) etwa um die Hälfte der Breite einer Einheit versetzt angeordnet ist.

6. Vorrichtung nach einem der Ansprüche 1 oder 6, dadurch gekennzeichnet, daß die Mitte (20) der Palettendrehstation (12) gegenüber der Mitte (19) der Lastaufnahme (16) verstellbar ist.

7. Vorrichtung nach einem der Ansprüche 1 bis 4, dadurch gekennzeichnet, daß die Antriebsmittel für die Palettendrehstation (12), für den einstellbaren Haltepunkt, wie einen Anschlag (17), der Transportbahn (11), für die Quer- und Höhenverstellung der Halterung (15) der Lastaufnahme (16) von einer zentralen Steuereinheit entsprechend der vorgegebenen Lagepläne der Einheiten (1-10) für die einzelnen Lagen auf der Palette (13) ansteuerbar sind.

FIG. 1

FIG. 2

EP 0 330 994 A1

FIG. 3

14

15

18

13

12

FIG. 4

Drehung

X-Achse

Z-Achse

Y-Achse

11

17

18

13

FIG. 5

FIG. 6

FIG. 7

FIG. 8

1. Lage

2. Lage

FIG. 9

FIG. 10

FIG. 11

FIG. 12

FIG. 13

| | **EINSCHLÄGIGE DOKUMENTE** | | EP 89103135.3 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | <u>DE - A1 - 3 402 461</u> (BEHN MASCHINENFABRICK GMBH & CO. KG.)<br><br>* Ansprüche 1,7; Fig. 1,3 *<br><br>-- | 1 | B 65 G 57/22 |
| A | SOVIET INVENTIONS ILLUSTRATED, Sektionen P,Q, Woche 8702, 25. Februar 1987<br><br>DERWENT PUBLICATIONS LTD., London Q 35<br><br>* SU-A-1230-942 (ROSPISHCHEP-ROMAVTOM) *<br><br>-- | 1 | |
| D,A | <u>DD - A1 - 239 999</u> (VEB BEHÄLTER-GLAS BERNSDORF)<br><br>* Ansprüche 1,2; Fig. 1 *<br><br>---- | 1 | |

RECHERCHIERTE
SACHGEBIETE (Int. Cl.4)

B 65 G

Der vorliegende Recherchenbericht wurde für alle Patentansprüche erstellt.

| Recherchenort | Abschlußdatum der Recherche | Prüfer |
|---|---|---|
| WIEN | 09-06-1989 | PISSENBERGER |